# EUROPÄISCHE PATENTSCHRIFT

(11) **EP 1 088 023 B1**
(45) Veröffentlichungstag und Bekanntmachung des Hinweises auf die Patenterteilung: **04.12.2002**
(21) Anmeldenummer: 99938162.7
(22) Anmeldetag: 10.06.1999
(51) Int. Cl.: C08J 9/06, B29C 35/08, B29C 67/00

(54) **VERFAHREN ZUR HERSTELLUNG VON GESCHÄUMTEN KUNSTSTOFFBLÖCKEN AUF POLYOLEFINBASIS**
METHOD FOR PRODUCING FOAMED PLASTIC BLOCKS BASED ON POLYOLEFIN
PROCEDE DE PRODUCTION DE BLOCS DE MOUSSE A BASE DE POLYOLEFINES

(30) Priorität: 10.06.1998 DE 19825939
(43) Veröffentlichungstag der Anmeldung: 04.04.2001
(73) Patentinhaber: HT TROPLAST AG, 53840 Troisdorf (DE); Studer Draht-und Kabelwerk AG, 4658 Däniken (CH)
(72) Erfinder: HARGARTEN, Werner, D-51570 Windeck (DE); HARTMANN, Hans, Jörg, CH-4600 Olten (CH); VOSS, Burkhard, D-50259 Pulheim (DE)
(74) Vertreter: Wübken, Ludger
(86) Internationale Anmeldenummer: DE9901701
(87) Internationale Veröffentlichungsnummer: WO99064502

(56) Entgegenhaltungen:
- DD-A- 222 824
- US-A- 4 186 068
- US-A- 4 203 815

## Beschreibung

### Technisches Gebiet

Die Erfindung betrifft ein Verfahren zur Herstellung von geschäumten Kunststoffblöcken auf Polyolefinbasis, insbesondere auf der Basis von vernetztem Polyethylen.

Bei der Herstellung von vernetzten Polyethylen-Schaumstoffen geht man gemeinhin von einer sogenannten Matrix, einer kompakten Kunststoffplatte oder -bahn, die das Schäummittel und ggf. ein Vernetzungsmittel in feinverteilter Form enthält, jedoch noch ungeschäumt ist, aus. Die Matrix wird im allgemeinen extrudiert, wobei die Temperatur unterhalb der Zersetzungs- bzw. Reaktionstemperatur des Vernetzungs- und Verschäumungsmittels liegen muß.

Bei der Vernetzung unterscheidet man
- physikalische Vernetzung mittels energiereicher Strahlung wie β- oder γ-Strahlung
- chemische Vernetzung z. B. mittels organischer Peroxide, die bei Überschreiten einer bestimmten Temperatur eine Vernetzung des Kunststoffs bewirken.

Bezüglich der Verschäumung unterscheidet man
- eine kontinuierliche Verschäumung von Bahnenware aus einer endlosen Matrix einer Dicke bis ca. 5 mm und
- das sogenannte Blockschaumverfahren, ein diskontinuierliches Verschäumen größerer Matrix-Platten.

Während die im Blockschaumverfahren hergestellten Schaumstoffblöcke und die kontinuierlich hergestellte Bahnenware mit physikalischer Vernetzung sehr feinzellig sind, führt die kontinuierliche Herstellung chemisch vernetzter Schaumstoffe zu einer eher gröberen Zellstruktur. Typische Zellgrößen sind z.B. 0,1 - 0,2 mm für chemisch vernetzten Blockschaum, 0,6 - 0,8 mm für chemisch vernetzten Schaum aus kontinuierlicher Verschäumung und 0,3 - 0,4 mm für physikalisch vernetzten Schaum aus kontinuierlicher Verschäumung.

### Stand der Technik

Ein Verfahren zur kontinuierlichen Herstellung von chemisch vernetzten Schaumstoffbahnen auf Polyolefinbasis ist beispielsweise in der DE 16 94 130 C3 beschrieben, während das Blockschaumverfahren mit chemischer Vernetzung beispielsweise aus der DE 34 30 108 C2 und der EP 0 186 110 B1 bekannt ist. Die US 3,562,367 A schließlich betrifft ein Verfahren zur kontinuierlichen Herstellung von physikalisch vernetzten Schaumstoffbahnen, bei der Elektronenstrahlen (β-Strahlung) zur Vernetzung eingesetzt werden.

Während die Herstellung von kontinuierlichen Bahnen von Schaumstoffen auf Basis von Polyethylen sowohl mit physikalischer Vernetzung als auch mit chemischer Vernetzung in großem Umfang angewandt werden, ist bei der Herstellung von Blockschaum bisher nur eine chemische Vernetzung bekannt geworden.

Als Vernetzungsmittel wird allgemein Dicumylperoxid eingesetzt. Da Dicumylperoxid physiologisch nicht ganz unbedenklich ist, dürfen Schaumstoffe für Lebensmittelbedarfsgegenstände aus Vorsichtsgründen nicht mit größeren Mengen an Dicumylperoxid vernetzt sein.

### Aufgabe

Aufgabe der vorliegenden Erfindung war es daher, ein Verfahren zur Herstellung von vernetztem Blockschaum auf der Basis von Polyolefinen, insbesondere Polyethylen, zur Verfügung zu stellen, das ohne oder mit nur geringen Mengen an Dicumylperoxid zu feinzelligen Schäumen führt.

### Darstellung der Erfindung

Die Erfindung löst diese Aufgabe durch ein Verfahren nach Anspruch 1, bevorzugt in Verbindung mit einem oder mehreren der Merkmale der Unteransprüche.

Wesentliches Merkmal ist dabei der Einsatz von β-Strahlung, also von Elektronenstrahlen, mit einer Energie der Elektronen > 6 MeV und einer Dicke der Matrix zwischen 25 und 45 mm. Es hat sich herausgestellt, daß bei Verwendung einer Elektronenstrahlung von < 6 MeV die Matrix inhomogen vernetzt wird, wodurch der Schaum eine ungleichmäßige Qualität und ungleichmäßige physikalische Eigenschaften aufweist.

Bevorzugt wird eine β-Strahlung einer Energie von 8 bis 15 MeV eingesetzt, wobei die Matrix bevorzugt eine Dicke von 30 bis 40 mm aufweist.

Die Dosis der Bestrahlung beträgt 20 bis 150 kJ/kg [= 20 bis 150 kGy], bevorzugt 40 bis 70 kJ/kg. Bei einer Strahlungsdosis unter 20 kJ/kg wird die Matrix unzureichend vernetzt, während bei einer Dosis oberhalb von 150 kJ/kg eine zu starke Vernetzung den Schäumprozeß behindert.

Durch Zusatz von Vernetzungshilfsmitteln wie Trimethylpropantrimethacrylat, Diallylphthalat, Allylmethacrylat und Triallylcyanurat in Mengen von 0,05 bis 2 Gew.-% der Matrix kann die Dosis der Bestrahlung im unterem Bereich von 20 bis 80 kJ/kg eingestellt werden, während bei Einsatz eines Materials ohne Vernetzungshilfsmitteln oder Vernetzungsbeschleunigern eine etwas höhere Dosis der β-Strahlung benötigt werden.

Die erfindungsgemäß eingesetzte hohe Strahlungsdosis mit Elektronen sehr hoher Energie führt zu einer starken Erwärmung der Matrix durch die Bestrahlung. Bevorzugt wird daher die Vernetzung durch β-Strahlung in mehreren Durchgängen mit jeweils einer Teildosis von 10 bis 50 kJ/kg durchgeführt. Zwischen je zwei Durchgängen wird die Matrix bevorzugt abgekühlt. Besonders bevorzugt wird bei einer Vernetzung in mehreren Durchgängen jeweils eine Bestrahlung von der Oberseite und die nächste Bestrahlung von der anderen Seite durchgeführt. Hierdurch wird eine gleichmäßige Vernetzung der Matrix erreicht.

Bei hohen Strahlungsdosen wird nach einer weiteren bevorzugten Ausführungsform der Erfindung die Temperatur in der Matrix durch Anpassung der Höhe der Teildosis der einzelnen Bestrahlungsdurchgänge so gesteuert, daß die Temperatur der Matrix zu keinem Zeitpunkt 70°C übersteigt, bevorzugt beträgt die Maximaltemperatur höchstens 50°C.

Die Verwendung von Elektronenstrahlung hoher Energie führt an der Matrix-Oberfläche zu einer chemischen Veränderung, insbesondere einer Oxidation, die beim späteren Aufschäumen der Matrix zu einer Hautbildung und Rissen in der Oberfläche führt. Erfindungsgemäß wird daher die Matrix vor dem Zutritt von Luftsauerstoff wenigstens weitgehend geschützt. Dieses erfolgt bevorzugt durch Auftragen eines dickflüssigen oder pastösen Mittels, beispielsweise eines Wachses o. dgl. Nach einer alternativen bevorzugten Ausführungsform der Erfindung wird die Matrix während der Bestrahlung durch eine Umhüllung aus einer Folie aus z. B. Polyethylen vor dem Zutritt von Luftsauerstoff wenigstens weitgehend geschützt.

Als thermoplastischer Kunststoff wird ein Polyolefin verwendet, daß wenigstens überwiegend aus Polyethylen und/oder Ethylen-Copolymer besteht. Hierzu sind insbesondere LDPE, HDPE, LLDPE, VLDPE, eine Mischung dieser Polyethylensorten oder eine Mischung eines oder mehrerer dieser Polyethylensorten mit EVA und/oder EPM oder EPDM bevorzugt.

Nach einer weiteren bevorzugten Ausführungsform der Erfindung wird der Matrix zusätzlich 0,05 bis 5 Gew.-% Zinkoxid zur Herabsetzung der Zerfallstemperatur des Treibmittels zugesetzt.

Die Matrix enthält nach einer weiteren Ausgestaltung der Erfindung bevorzugt 0,05 bis 1 Gew.-% feinteiliges Magnesiumhydroxid. Hierdurch wird die Zellgröße der Zellen des Schaumstoffs verringert.

Es hat sich herausgestellt, daß die Qualität des erhaltenen Schaums besonders gut ist, wenn zwischen der Vernetzung durch Elektronenbestrahlung und der Verschäumung eine Wartezeit von mindestens 24 h. eingehalten wird.

Die Erfindung eignet sich zur Herstellung von Schaumstoffblökken einer mittleren Dichte von 20 bis 180 kg/m², bevorzugt werden Dichten von 30 bis 130 kg/m².

Als Schäum- bzw. Treibmittel wird - entsprechend dem Stand der Technik - bevorzugt Azodicarbonamid eingesetzt. Die Verschäumung selbst erfolgt in an sich bekannter Weise in geschlossenen, beheizten Formen, wobei die Größe der Form um den gewünschten Schäumfaktor größer ist als die Matrix.

### Weg zur Ausführung der Erfindung

Zur Herstellung eines Schaumstoff-Blocks mit den Maßen 100 cm x 200 cm x 10 cm, Rohdichte ca. 45 kg/cm³, wird folgender Ansatz auf einem Einschneckenextruder homogenisiert und zu einer Matrix einer Dicke von 3,5 cm und einer Breite von 35 cm extrudiert:

| | |
|---|---|
| LDPE | 100 Gew.-Teile |
| Azodicarbonamid | 17 Gew.-Teile |
| Zinkoxid | 1 Gew.-Teil |
| Farbpigment | 1,5 Gew.-Teile |

Bei der Extrusion muß darauf geachtet werden, daß die max. Temperatur einen Wert von 140 °C nicht übersteigt, um eine vorzeitige Reaktion des Azodicarbonamids (Treibmittel) zu verhindern. Ein 70 cm langer Abschnitt dieser Matrix wird nach Abkühlung in handelsüblicher PE-Folie luftdicht eingeschweißt, wobei die PE-Folie eine Stärke von ca. 50 µm aufweist. Beim Verschweißen wird mittels Vakuum die restliche Luft aus der Verpackung entfernt.

Die so vorbereitete Matrix wird in einer Elektronen-Bestrahlungsanlage mit β-Strahlung mit einer Energie der Elektronen von 10 MeV bestrahlt, wobei in einem ersten Durchgang von der Oberseite bestrahlt wird, wobei die absorbierte Dosis der Bestrahlung 15 kJ/kg beträgt. Die Matrix erwärmt sich bei der ersten Bestrahlung auf 28 °C. Nach einer Verweilzeit von 20 min. wird die zweite Seite der Matrix mit der gleichen Teildosis bestrahlt. Nach weiterer Verweilzeit von 20 min. wird nochmals die erste und danach nochmals die zweite Seite jeweils mit einer Teildosis von 15 kJ/kg bestrahlt, so daß die gesamte Dosis 60 kJ/kg beträgt.

Durch die Bestrahlung vernetzt das Matrixmaterial. Nach einer Verweilzeit von 48 h wird die vernetzte Matrix in einem Umlaufofen bei 160 °C für 4 h vorgewärmt. Die vorgewärmte Matrix wird anschließend in eine Schäumform gegeben, deren Innenmaß den gewünschten Maßen des Schaumstoff-Blocks von 1 m x 2 m x 10 cm entspricht. Die Wandtemperatur der Schäumform ist auf ca. 170 °C erwärmt. Bei dieser Temperatur wird die exotherme Zersetzung des Azodicarbonamids gestartet. Nach ca. 1 h ist der Block vollständig aufgeschäumt und die Form vollständig ausfüllt. Nach Abkühlung in der geschlossenen Form auf ca. 80 °C kann der Block entformt und an der Luft weiter abgekühlt werden.

Der so hergestellte physikalisch vernetzte Blockschaum wies eine sehr feine Zellstruktur und gute physikalische Eigenschaften auf.

## Patentansprüche

1. Verfahren zur Herstellung von geschäumten Kunststoffblökken auf Polyolefinbasis durch
• Vernetzen einer Matrix, enthaltend
a) 51 bis 97 Gew.-% eines oder mehrerer Polyolefine, ausgewählt aus der Gruppe bestehend aus Polyethylen und Ethylen-Copolymer,
b) 3 bis 20 Gew.-% eines Schäummittels,
mit einer β-Strahlung einer Energie > 6 MeV, wobei
- die Matrix eine Dicke von 25 bis 45 mm aufweist,
- die Dosis der Bestrahlung 20 bis 150 kJ/kg beträgt und
- die Oberfläche der Matrix während der Bestrahlung vor dem Zutritt von Luftsauerstoff wenigstens weitgehend geschützt ist,
• Aufschäumen der vernetzten Matrix durch Erwärmen auf eine Temperatur > 160 °C und Zersetzung des Treibmittels.

2. Verfahren nach Anspruch 1, **dadurch gekennzeichnet, daß** die Dosis der Bestrahlung 40 bis 70 kJ/kg beträgt.

3. Verfahren nach einem der Ansprüche 1 oder 2, **dadurch gekennzeichnet, daß** die Vernetzung durch β-Strahlung in mehren Durchgängen mit jeweils einer Teildosis von 10 bis 50 kJ/kg erfolgt.

4. Verfahren nach einem der Ansprüche 1 bis 3, **dadurch gekennzeichnet, daß** die Vernetzung durch β-Strahlung in mehren Durchgängen erfolgt, wobei die Temperatur in der Matrix jeweils maximal 70 °C, bevorzugt maximal 50 °C erreicht.

5. Verfahren nach einem der Ansprüche 1 bis 4, **dadurch gekennzeichnet, daß** die Oberfläche der Matrix während der Bestrahlung durch eine Umhüllung aus einer Polyethylenfolie vor dem Zutritt von Luftsauerstoff wenigstens weitgehend geschützt ist.

6. Verfahren nach einem der Ansprüche 1 bis 4, **dadurch gekennzeichnet, daß** die Oberfläche der Matrix während der Bestrahlung durch eine Schutzschicht aus einem dickflüssigen oder pastösen Mittel vor dem Zutritt von Luftsauerstoff wenigstens weitgehend geschützt ist.

7. Verfahren nach einem der Ansprüche 1 bis 6, **dadurch gekennzeichnet, daß** als Polyethylen bzw. Ethylen-Copolymer ein LDPE, HDPE, LLDPE, VLDPE, eine Mischung dieser Polyethylensorten oder eine Mischung eines oder mehrerer dieser Polyethylensorten mit EVA und/oder EPM und/oder EPDM eingesetzt wird.

8. Verfahren nach einem der Ansprüche 1 bis 7, **dadurch gekennzeichnet, daß** die Matrix zusätzlich 0,05 bis 2 Gew.-% eines Vernetzungshilfsmittels oder Vernetzungsbeschleunigers enthält.

9. Verfahren nach Anspruch 8, **dadurch gekennzeichnet, daß** als Vernetzungshilfsmittel eines oder mehrere aus der Gruppe bestehend aus Trimethylpropantrimethacrylat, Diallylphthalat, Allylmethacrylat und Triallylcyanurat eingesetzt wird.

10. Verfahren nach einem der Ansprüche 1 bis 9, **dadurch gekennzeichnet, daß** die Matrix zusätzlich 0,05 bis 5 Gew.-% Zinkoxid enthält.

11. Verfahren nach einem der Ansprüche 1 bis 10, **dadurch gekennzeichnet, daß** die Matrix zusätzlich 0,05 bis 1 Gew.-% feinteiliges Magnesiumhydroxid enthält.

12. Verfahren nach einem der Ansprüche 1 bis 11, **dadurch gekennzeichnet, daß** zwischen der Bestrahlung und der Verschäumung eine Wartezeit > 24 h eingehalten wird.

13. Verfahren nach einem der Ansprüche 1 bis 12, **dadurch gekennzeichnet, daß** die Verschäumung zu einem Schaumstoffblock einer mittleren Dichte von 20 - 180 kg/m³, bevorzugt 30 - 120 kg/m³ führt.

## Claims

1. Process for producing foamed polyolefin-based plastics blocks by
• crosslinking a matrix comprising
a) from 51 to 97% by weight of one or more polyolefins, selected from the group consisting of polyethylene and ethylene copolymer,
b) from 3 to 20% by weight of a foaming agent,
using β-radiation of energy > 6 MeV, where
- the thickness of the matrix is from 25 to 45 mm,
- the radiation dose is from 20 to 150 kJ/kg, and
- during the irradiation, atmospheric oxygen is at least substantially prevented from reaching the surface of the matrix,
• foaming the crosslinked matrix by heating to a temperature > 160°C and decomposing the blowing agent.

2. Process according to Claim 1, **characterized in that** the radiation dose is from 40 to 70 kJ/kg.

3. Process according to Claim 1 or 2, **characterized in that** the crosslinking takes place in a number of β-radiation passes, with in each case a partial dose of from 10 to 50 kJ/kg.

4. Process according to any of Claims 1 to 3, **characterized in that** the crosslinking takes place in a number of β-radiation passes, where the temperature in the matrix reaches in each case not more than 70°C, preferably not more than 50°C.

5. Process according to any of Claims 1 to 4, **characterized in that** during the irradiation an envelope made from a polyethylene film at least substantially prevents atmospheric oxygen from reaching the surface of the matrix.

6. Process according to any of Claims 1 to 4, **characterized in that** during the irradiation a protective layer made from a paste or high-viscosity composition at least substantially prevents atmospheric oxygen from reaching the surface of the matrix.

7. Process according to any of Claims 1 to 6, **characterized in that** the polyethylene or ethylene copolymer used comprises an LDPE, HDPE, LLDPE, VLDPE, a mixture of these polyethylene types, or a mixture of one or more of these polyethylene types with EVA and/or EPM and/or EPDM.

8. Process according to any of Claims 1 to 7, **characterized in that** the matrix also comprises from 0.05 to 2% by weight of a crosslinking aid or crosslinking accelerator.

9. Process according to Claim 8, **characterized in that** the crosslinking aid used comprises one or more crosslinking aids selected from the group consisting of trimethylpropane trimethacrylate [sic], diallyl phthalate, allyl methacrylate and triallyl cyanurate.

10. Process according to any of Claims 1 to 9, **characterized in that** the matrix also comprises from 0.05 to 5% by weight of zinc oxide.

11. Process according to any of Claims 1 to 10, **characterized in that** the matrix also comprises from 0.05 to 1% by weight of fine-particle magnesium hydroxide.

12. Process according to any of Claims 1 to 11, **characterized in that** a waiting time > 24 h is maintained between irradiation and foaming.

13. Process according to any of Claims 1 to 12, **characterized in that** the foaming gives a foam block whose average density is from 20 to 180 kg/m³, preferably from 30 to 120 kg/m³.

## Revendications

1. Procédé pour la fabrication de blocs de matière plastique expansés à base de polyoléfine, par
• réticulation d'une matrice contenant
a) 51 à 97 % en poids d'une ou plusieurs polyoléfines choisie(s) dans le groupe constitué par le polyéthylène et un copolymère d'éthylène,
b) 3 à 20 % en poids d'un agent d'expansion,
à l'aide d'un rayonnement β d'une énergie > 6 MeV,
- la matrice ayant une épaisseur de 25 à 45 mm,
- la dose de l'irradiation étant de 20 à 150 kJ/kg et
- la surface de la matrice étant au moins dans une large mesure protégée contre l'entrée de l'oxygène de l'air pendant l'irradiation,
• expansion de la matrice réticulée par chauffage à une température > 160°C et décomposition du porogène.

2. Procédé selon la revendication 1, **caractérisé en ce que** la dose de l'irradiation est de 40 à 70 kJ/kg.

3. Procédé selon la revendication 1 ou 2, **caractérisé en ce que** la réticulation par rayonnement β s'effectue en plusieurs passes avec chaque fois une dose partielle de 10 à 50 kJ/kg.

4. Procédé selon l'une quelconque des revendications 1 à 3, **caractérisé en ce que** la réticulation par rayonnement β s'effectue en plusieurs passes, la température dans la matrice atteignant chaque fois 70°C au maximum, de préférence 50°C au maximum.

5. Procédé selon l'une quelconque des revendications 1 à 4, **caractérisé en ce que** la surface de la matrice est au moins dans une large mesure protégée contre l'entrée de l'oxygène de l'air, pendant l'irradiation, par une enveloppe constituée d'une pellicule de polyéthylène.

6. Procédé selon l'une quelconque des revendications 1 à 4, **caractérisé en ce que** la surface de la matrice est au moins dans une large mesure protégée contre l'entrée de l'oxygène de l'air, pendant l'irradiation, par une couche protectrice d'un produit visqueux ou pâteux.

7. Procédé selon l'une quelconque des revendications 1 à 6, **caractérisé en ce qu'**on utilise en tant que polyéthylène ou copolymère d'éthylène un LDPE, HDPE, LLDPE, VLDPE, un mélange de ces types de polyéthylène ou un mélange d'un ou plusieurs de ces types de polyéthylène avec de l'EVA et/ou de l'EPDM.

8. Procédé selon l'une quelconque des revendications 1 à 7, **caractérisé en ce que** la matrice contient en outre de 0,05 à 2 % en poids d'un agent auxiliaire de réticulation ou d'un accélérateur de réticulation.

9. Procédé selon la revendication 8, **caractérisé en ce qu'**on utilise comme agent auxiliaire de réticulation un ou plusieurs composés choisis dans le groupe constitué par le triméthacrylate de triméthylpropane, le phtalate de diallyle, le méthacrylate d'allyle et le cyanurate de triallyle.

10. Procédé selon l'une quelconque des revendications 1 à 9, **caractérisé en ce que** la matrice contient en outre de 0,05 à 5 % en poids d'oxyde de zinc.

11. Procédé selon l'une quelconque des revendications 1 à 10, **caractérisé en ce que** la matrice contient en outre de 0,05 à 1 % en poids d'hydroxyde de magnésium finement divisé.

12. Procédé selon l'une quelconque des revendications 1 à 11, **caractérisé en ce qu'**un temps d'attente > 24 h est maintenu entre l'irradiation et l'expansion.

13. Procédé selon l'une quelconque des revendications 1 à 12, **caractérisé en ce que** l'expansion conduit à un bloc de mousse ayant une densité moyenne de 20-180 kg/m³, de préférence de 30-120 kg/m³.
